# EUROPEAN PATENT APPLICATION

(11) **EP 4 432 160 A1**
(43) Date of publication of application: **18.09.2024**
(21) Application number: 21963317.9
(22) Date of filing: 08.11.2021
(51) Int. Cl.: G06N 3/02

(54) **INFORMATION PROCESSING DEVICE, INFORMATION PROCESSING METHOD, AND PROGRAM**

(71) Applicant: NEC Corporation, 108-8001 Tokyo (JP)
(72) Inventor: SAWADA, Azusa, Tokyo 108-8001 (JP)
(74) Representative: Betten & Resch
(86) International application number: PCT/JP2021/040917
(87) International publication number: WO 2023/079723

(57) **Abstract**

To provide an inference technique that is suitably applicable even in a case where data having various lengths are inputted, an information processing apparatus (1) includes: a feature map generation section (11) that generates a plurality of scale-specific feature maps from input data; a feature series generation section (12) that generates a feature series from the plurality of scale-specific feature maps; and a feature information generation section (13) that generates feature information by inputting the feature series into a recursive model.

## Description

### Technical Field

The present invention relates to an information processing apparatus, an information processing method, and a program each for generating feature information.

### Background Art

A model that receives variable-length data as input data and extracts a feature of the variable-length data is known.

For example, Non-patent Literature 1 discloses a technique in which variable-length speech is used as input, convolutional layers with different kernel sizes to receive input are switched depending on term length, short term and long term, of contexts inputted, and feature maps of a plurality of convolutional blocks are inputted into a multiscale statistics pooling, to extract a feature.

### Citation List

### [Non-patent Literature]

### [Non-patent Literature 1]

Yanfeng Wu et al., "Improving Deep CNN Architectures with Variable-Length Training Samples for Text-Independent Speaker Verification," In INTERSPEECH 2020

### Summary of Invention

### Technical Problem

The technique disclosed in Non-patent Literature 1 requires all feature maps inputted into the multiscale statistics pooling to have lengths of 1 or more. Therefore, the technique disclosed in Non-patent Literature 1 has the lower limit in length of applicable data, so that there is scope for improvement in terms of coping with data having a variety of lengths.

An example aspect of the present invention has been made in view of this problem, and an example object thereof is to provide an inference technique that is suitably applicable even in a case where data having various lengths are inputted.

### Solution to Problem

An information processing apparatus in accordance with an example aspect of the present invention, includes: feature map generation means for generating a plurality of scale-specific feature maps from input data; feature series generation means for generating a feature series from the plurality of scale-specific feature maps; and feature information generation means for generating feature information by inputting the feature series into a recursive model.

An information processing method in accordance with an example aspect of the present invention, includes: generating, by an information processing apparatus, a plurality of scale-specific feature maps from input data; generating, by the information processing apparatus, a feature series from the plurality of scale-specific feature maps; and generating, by the information processing apparatus, feature information by inputting the feature series into a recursive model.

A program in accordance with an example aspect of the present invention is a program for causing a computer to function as: feature map generation means for generating a plurality of scale-specific feature maps from input data; feature series generation means for generating a feature series from the plurality of scale-specific feature maps; and feature information generation means for generating feature information by inputting the feature series into a recursive model.

### Advantageous Effects of Invention

According to an example aspect of the present invention, it is possible to provide an inference technique that is suitably applicable even in a case where data having various lengths are inputted.

### Brief Description of Drawings

Fig. 1 is a block diagram illustrating the configuration of an information processing apparatus in accordance with a first example embodiment of the present invention.
Fig. 2 is a flowchart illustrating the flow of an information processing method in accordance with the first example embodiment of the present invention.
Fig. 3 is a block diagram illustrating the configuration of an information processing apparatus in accordance with a second example embodiment of the present invention.
Fig. 4 is a diagram illustrating an example of processing carried out by a control section in accordance with the second example embodiment of the present invention.
Fig. 5 is a diagram illustrating an application example of the information processing apparatus in accordance with the second example embodiment of the present invention.
Fig. 6 is another diagram illustrating an application example of the information processing apparatus in accordance with the second example embodiment of the present invention.
Fig. 7 is a flowchart illustrating the flow of processing carried out by the information processing apparatus in accordance with the second example embodiment.
Fig. 8 is a block diagram illustrating the configuration of an information processing apparatus in accordance with a third example embodiment of the present invention.
Fig. 9 is a block diagram illustrating the configuration of an information processing apparatus in accordance with a fourth example embodiment of the present invention.
Fig. 10 is a flowchart illustrating the flow of processing carried out by the information processing apparatus in accordance with the fourth example embodiment.
Fig. 11 is a block diagram illustrating an example of the hardware configuration of the information processing apparatus in accordance with each of the example embodiments of the present invention.

### Example Embodiments

### [First Example Embodiment]

The following description will discuss a first example embodiment of the present invention in detail with reference to the drawings. The present example embodiment is a basic form of example embodiments described later.

### (Configuration of information processing apparatus 1)

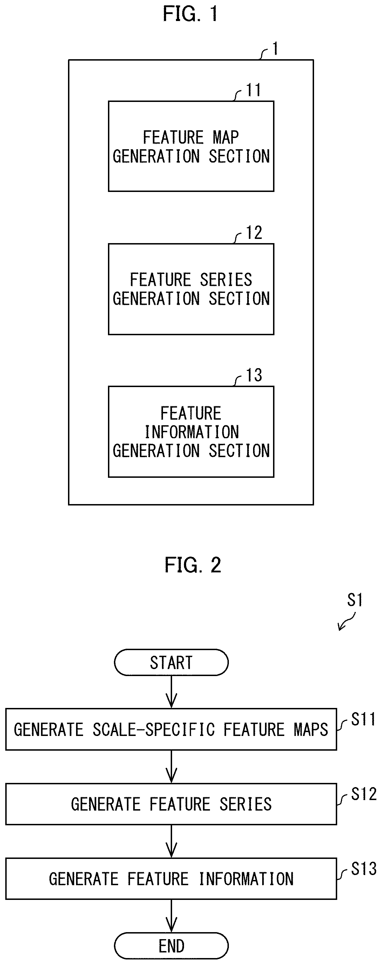

The following description will discuss the configuration of an information processing apparatus 1 in accordance with the present example embodiment with reference to Fig. 1. Fig. 1 is a block diagram illustrating the configuration of the information processing apparatus 1 in accordance with the present example embodiment.

The information processing apparatus 1 is an apparatus that generates, from input data, feature information related to the input data.

An example of the input data may be a moving image. Further, an example of the feature information may be, but not limited to, feature information that includes a prediction result of an object included in the input moving image.

As illustrated in Fig. 1, the information processing apparatus 1 includes a feature map generation section 11, a feature series generation section 12, and a feature information generation section 13. The feature map generation section 11, the feature series generation section 12, and the feature information generation section 13 are configured to implement feature map generation means, feature series generation means, and feature information generation means, respectively, in the present example embodiment.

The feature map generation section 11 generates a plurality of scale-specific feature maps from input data. The feature map generation section 11 provides the generated scale-specific feature maps to the feature series generation section 12. The feature map generation section 11 generates the plurality of scale-specific feature maps by using a plurality of convolutional layers that act on input data in series.

Use of the plurality of convolutional layers that act on input data in series allows an upstream convolutional layer to provide a feature map reflecting local information of the input data (feature map with small scale) and a downstream convolutional layer to provide a feature map reflecting global information of the input data (feature map with large scale). The order of the scale is positively correlated with the so-called receptive field (RF).

The feature map generation section 11 is not limited to the use of the plurality of convolutional layers that act on input data in series; the feature map generation section 11 may be configured to use a plurality of convolutional layers that act on input data in parallel and generate feature maps with different Rfs.

The feature series generation section 12 generates a feature series from the plurality of scale-specific feature maps. The feature series generation section 12 provides the generated feature series to the feature information generation section 13. The feature series is a series constituted by scale-specific feature maps outputted from the feature map generation section 11, and may be, for example, a series of the scale-specific feature maps arranged in order of scale.

The feature information generation section 13 generates feature information by inputting the feature series into a recursive model. The recursive model is a model that repeatedly receives input on a unit-by-unit basis in order from the beginning of the series. Examples of the recursive model may include, but not limited to, recurrent neural network (RNN), long short term memory (LSTM), and gated recurrent unit (GRU).

As described in the foregoing, the information processing apparatus 1 in accordance with the present example embodiment employs a configuration including the feature map generation section 11 that generates a plurality of scale-specific feature maps from input data, the feature series generation section 12 that generates a feature series from the plurality of scale-specific feature maps, and the feature information generation section 13 that generates feature information by inputting the feature series into a recursive model.

Thus, according to the information processing apparatus 1 in accordance with the present example embodiment, since the feature series constituted by the plurality of scale-specific feature maps generated from the input data is inputted into the recursive model, it is possible to provide an inference technique that is suitably applicable even in a case where data having various lengths are inputted.

### (Flow of information processing method S1)

The following description will discuss the flow of an information processing method S1 in accordance with the present example embodiment with reference to Fig. 2. Fig. 2 is a flowchart illustrating the flow of the information processing method S1 in accordance with the present example embodiment.

### (Step S11)

In step S11, the feature map generation section 11 generates a plurality of scale-specific feature maps from input data.

### (Step S12)

In step S12, the feature series generation section 12 generates a feature series from the plurality of scale-specific feature maps.

### (Step S13)

In step S13, the feature information generation section 13 generates feature information by inputting the feature series into a recursive model.

As described in the foregoing, the information processing method S1 in accordance with the present example embodiment employs a configuration in which: in step S11, the feature map generation section 11 generates a plurality of scale-specific feature maps from input data; in step S12, the feature series generation section 12 generates a feature series from the plurality of scale-specific feature maps; and, in step S13, the feature information generation section 13 generates feature information by inputting the feature series into a recursive model. Thus, the information processing method S1 in accordance with the present example embodiment achieves an example advantage similar to that of the information processing apparatus 1.

### [Second Example Embodiment]

The following description will discuss a second example embodiment of the present invention in detail with reference to the drawings. The same reference symbols are given to constituent elements which have functions identical to those described in the first example embodiment, and descriptions as to such constituent elements are omitted as appropriate.

### (Configuration of information processing apparatus 2)

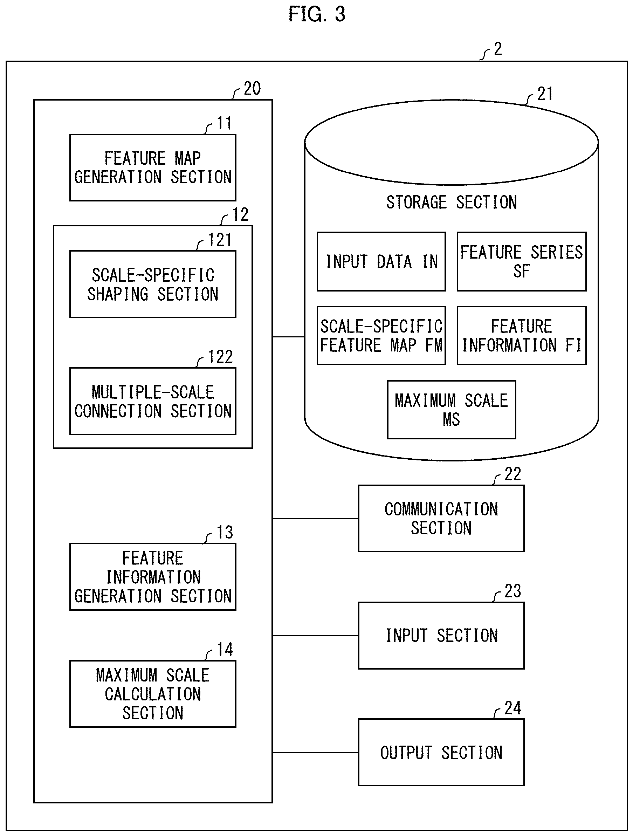

The following description will discuss the configuration of an information processing apparatus 2 in accordance with the present example embodiment with reference to Fig. 3. Fig. 3 is a block diagram illustrating the configuration of the information processing apparatus 2 in accordance with the present example embodiment.

The information processing apparatus 2 is an apparatus that obtains input data IN and generates feature information FI related to the input data IN.

Similarly to the abovementioned example embodiment, an example of the input data IN may be a moving image. Further, an example of the feature information FI may be, but not limited to, feature information that includes a prediction result of an object included in the input moving image.

As illustrated in Fig. 3, the information processing apparatus 2 includes a control section 20, a storage section 21, a communication section 22, an input section 23, and an output section 24.

The storage section 21 stores data referred to by the control section 20 described later. An example of the data stored in the storage section 21 may include, but not limited to, input data IN, scale-specific feature maps FM, a maximum scale MS, a feature series SF, and feature information FI. The input data IN, the scale-specific feature maps FM, the feature series SF, and the feature information FI are as described above. The maximum scale MS will be described later.

The communication section 22 is a communication module that communicates with another apparatus via a network (not illustrated). As an example, the communication section 22 may output data provided from the control section 20 described later to another apparatus via a network, and may obtain, via a network, data outputted from another apparatus and provide the data to the control section 20.

The input section 23 is an interface for receiving data from another apparatus connected. The input section 23 provides data received from another apparatus to the control section 20 described later.

The output section 24 is an interface for outputting data to another apparatus connected. The output section 24 outputs data provided from the control section 20 described later, to another apparatus.

### (Control section 20)

The control section 20 controls each of the sections included in the information processing apparatus 2. As an example, the control section 20 may store data obtained from the communication section 22 and the input section 23 in the storage section 21, and may provide data stored in the storage section 21 to the communication section 22 and the output section 24.

As illustrated in Fig. 3, the control section 20 also functions as the feature map generation section 11, the feature series generation section 12, the feature information generation section 13, and the maximum scale calculation section 14. The feature map generation section 11, the feature series generation section 12, the feature information generation section 13, and the maximum scale calculation section 14 are configured to implement feature map generation means, feature series generation means, feature information generation means, and maximum scale calculation means, respectively, in the present example embodiment.

The feature map generation section 11 obtains input data IN from the storage section 21 and generates a plurality of scale-specific feature maps FM from the obtained input data IN. The feature map generation section 11 generates the plurality of scale-specific feature maps FM by using a plurality of convolutional layers that act on the input data IN in series. The feature map generation section 11 stores the generated plurality of scale-specific feature maps FM in the storage section 21.

The feature series generation section 12 obtains: the plurality of scale-specific feature maps FM from the storage section 21; and a maximum scale MS calculated by the maximum scale calculation section 14 described later. Then, the feature series generation section 12 generates, from the obtained plurality of scale-specific feature maps FM, a feature series SF having a length in accordance with the obtained maximum scale MS. The feature series generation section 12 stores the generated feature series SF in the storage section 21.

As illustrated in Fig. 3, the feature series generation section 12 also functions as a scale-specific shaping section 121 and multiple-scale connection section 122.

The scale-specific shaping section 121 generates a plurality of feature data that accommodate differences in length and dimensionality of the plurality of scale-specific feature maps FM. As an example, the scale-specific shaping section 121 is constituted by a combination of a global pooling layer (GP), a linear transformation layer that varies the number of channels, and an activation function. As an example, the linear transformation layer that varies the number of channels may be constituted by a fully connected layer (FC) or a convolutional layer having a kernel size of 1, depending on a scale-specific feature map FM inputted. The scale-specific shaping section 121 provides the generated plurality of feature data to the multiple-scale connection section 122.

The multiple-scale connection section 122 obtains the plurality of feature data outputted from the scale-specific shaping section 121, and generates a feature series SF in which the plurality of feature data are arranged in order of scale corresponding to the plurality of the feature data. In other words, arranging in order of scale corresponding to feature data means arranging in order of convolutional layer corresponding to each fully connected layer.

The feature information generation section 13 obtains the feature series SF from the storage section 21 and generates feature information FI by inputting the obtained feature series SF into a recursive model. The recursive model is as described above.

The maximum scale calculation section 14 obtains the input data IN from the storage section 21 and calculates a maximum scale MS. The maximum scale is not more than the length of the input data IN and is the greatest scale. As an example, the maximum scale calculation section 14 refers to the input data IN or relevant information associated with the input data IN (such as information indicating the length of the input data IN), to calculate the maximum scale MS. The maximum scale calculation section 14 stores the calculated maximum scale MS in the storage section 21.

### (Example of processing carried out by control section 20)

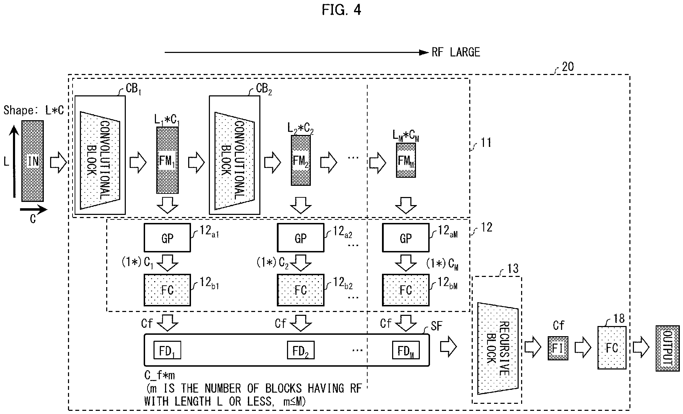

An example of processing carried out by the control section 20 will be described with reference to Fig. 4. Fig. 4 is a diagram illustrating an example of processing carried out by the control section 20 in accordance with the present example embodiment.

### (Example of processing carried out by feature map generation section 11)

As illustrated in Fig. 4, the feature map generation section 11 of the control section 20 obtains, from the storage section 21, input data IN having a length of L and a dimensionality of C. Herein, data having a length of L and a dimensionality of C may also be referred to as "data with Shape of L*C", in which "*" stands for the multiplication sign. Further, as illustrated in Fig. 4, the feature map generation section 11 includes convolutional blocks CB₁ to CB_{M} (the convolutional block CB_{M} is not illustrated in Fig. 4), which are M convolutional layers (M≥2) acting on input data IN in series, to generate a plurality of scale-specific feature maps.

When the feature map generation section 11 obtains the input data IN, the feature map generation section 11 inputs the obtained input data IN into the convolutional block CB₁, which is one of the M convolutional blocks CB₁ to CB_{M} acting in series and which acts first. The convolutional block CB₁ outputs a scale-specific feature map FM₁ with Shape of L₁*C₁.

The feature map generation section 11 may be configured so that the convolutional block CB₁ outputs a scale-specific feature map FM₀ identical to the input data IN as the identity mapping.

Subsequently, the feature map generation section 11 provides the scale-specific feature map FM, outputted from the convolutional block CB₁ to the convolutional block CB₂ that is greater in scale (larger in RF) than the scale-specific feature map FM₁. The feature map generation section 11 also stores the scale-specific feature map FM, in the storage section 21.

The feature map generation section 11 provides the scale-specific feature map FM₂ with Shape of L₂*C₂, outputted from the convolutional block CB₂, to the convolutional block CB₃ (not illustrated in Fig. 4). The feature map generation section 11 also stores the scale-specific feature map FM₂ in the storage section 21.

Thus, the feature map generation section 11 provides the scale-specific feature map FMₙ with Shape of Lₙ*Cₙ, outputted from the convolutional block CBₙ (1≤n≤M-2), to the convolutional block CBₙ₊₁. The feature map generation section 11 also stores the scale-specific feature map FMₙ in the storage section 21 until the feature map generation section 11 obtains the scale-specific feature map FM_{M-1} outputted from the convolutional block CB_{M-1} (Shape of the scale-specific feature map FM_{M-1} is L_{M-1}*C_{M-1}).

Here, the order relation between Lⱼ (1≤j≤M-1) and Lⱼ₊₁ is not particularly limited; as an example, the feature map generation section 11 may be configured so that Lⱼ is greater than Lⱼ₊₁. Similarly, the order relation between Cⱼ and Cⱼ₊₁ is not particularly limited; as an example, the feature map generation section 11 may be configured so that Cⱼ is greater than Cⱼ₊₁.

Finally, the feature map generation section 11 inputs the scale-specific feature map FM_{M-1} outputted from the convolutional block CB_{M - 1} into the convolutional block CB_{M} which acts last. The feature map generation section 11 stores, in the storage section 21, the scale-specific feature map FM_{M} with Shape of L_{M}*C_{M} outputted from the convolutional block CB_{M}.

### (Example of processing carried out by feature series generation section 12)

As illustrated in Fig. 4, the feature series generation section 12 includes, for each of the M convolutional blocks CB₁ to CB_{M}, a global pooling layer (GP) 12ₐₖ that acts on a scale-specific feature map FMₖ outputted by a convolutional block CBₖ (1≤k≤M), and a fully connected layer (FC) 12_{bk} that acts on the output of the GP 12ₐₖ.

The feature series generation section 12 inputs each of the scale-specific feature maps FM₁ to FM_{M} stored in the storage section 21 into the corresponding one of the GPs 12ₐ₁ to 12_{aM} acting on the scale-specific feature maps.

Then, when receiving the scale-specific feature maps FM₁ to FM_{M}, the GPs 12ₐ₁ to 12_{aM} output respective scale-specific feature maps FM_{1_1} to FM_{M_1} that accommodate the differences in length (L) of the scale-specific feature maps FM₁ to FM_{M}.

As an example, when the scale-specific feature map FM, is inputted into the GP 12ₐ₁, the difference in length (L) is accommodated and the GP 12ₐ₁ outputs the feature map FM_{1_1} with Shape of (1*)C₁. As another example, when the scale-specific feature map FM_{M} is inputted into the GP 12_{aM}, the difference in length (L) is accommodated and the GP 12_{aM} outputs the feature map FM_{M_1} with Shape of (1*)C_{M}.

Subsequently, the feature series generation section 12 inputs the feature maps FM_{1_1} to FM_{M_1} outputted from the respective GPs 12ₐ₁ to 12_{aM}, into the FCs 12_{b1} to 12_{bM}, respectively. When the feature maps FM_{1_1} to FM_{M_1} are inputted, the FCs 12_{b1} to 12_{bM} output feature data FD₁ to FD_{M}, respectively, each accommodating differences in dimensionality (C) of the feature maps FM_{1_1} to FM_{M_1}.

As an example, when the feature map FM_{1_1} is inputted into the FC 12_{b1}, the difference in dimensionality (C) is accommodated, and the FC 12_{b1} outputs the feature data FD₁ with Shape of Cf. As another example, when the feature map FM_{M-1} is inputted into the FC 12_{bM}, the difference in dimensionality (C) is accommodated, and the FC 12_{bM} outputs the feature data FD_{M} with Shape of Cf.

Next, the feature series generation section 12 obtains the maximum scale MS from the storage section 21 and arranges the feature data FD₁ to FD_{M} outputted from the FCs 12_{b1} to 12_{bM}, respectively, in order of scale corresponding to the feature data FD₁ to FD_{M}, with reference to the maximum scale MS, to generate the feature series SF with Shape of Cf*m. Here, m is the number of blocks having RF with a length of L or less, and m ≤ M (i.e., m is the value of the maximum scale MS). The feature series generation section 12 provides the generated feature series SF to the feature information generation section 13.

### (Example of processing carried out by feature information generation section 13)

The feature information generation section 13 inputs the obtained feature series SF into a recursive block, to generate feature information FI with Shape of Cf.

The feature information FI generated by the feature information generation section 13 may be provided to the FC 18, or may be provided to the communication section 22 or the output section 24, depending on the format outputted.

### (Application example of information processing apparatus 2)

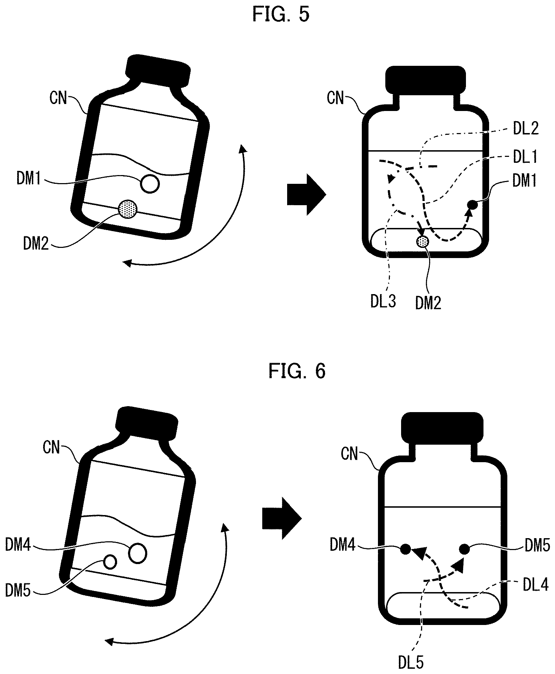

The following description will discuss application examples of the information processing apparatus 2 with reference to Figs. 5 and 6. Fig. 5 is a diagram illustrating an application example of the information processing apparatus 2 in accordance with the present example embodiment, and Fig. 6 is another diagram illustrating an application example of the information processing apparatus 2 in accordance with the present example embodiment.

In the examples illustrated in Figs. 5 and 6, the information processing apparatus 2 obtains, as the input data IN, a moving image taken of a swinging state of a container CN that holds liquid, and outputs feature information FI indicating whether or not an object that is present in the container CN is a bubble.

As an example, in the container CN illustrated on the left side of Fig. 5, an object DM1 and an object DM2 are present in the liquid. When the container CN is made to swing as illustrated on the left side of Fig. 5, the object DM1 moves and draws a locus DL1, and the object DM2 moves and draws loci DL2 and DL3, as illustrated on the right side of Fig. 5. The control section 20 of the information processing apparatus 2 obtains, as the input data IN, a moving image taken of a swinging state of the container CN, and detects the locus DL1 drawn by the object DM1, and the loci DL2 and DL3 drawn by the object DM2.

Next, the control section 20 identifies the object that is present in the container CN on the basis of the detected loci. In the diagram illustrated in Fig. 5, the control section 20 determines that the locus DL1 is a locus drawn by a bubble, and outputs feature information FI indicating that the object DM1 that draws the locus DL1 is a bubble. Further, in the diagram illustrated in Fig. 5, the control section 20 determines that the locus DL2 is a locus drawn by a bubble and the locus DL3 is a locus drawn by an object other than a bubble, and thus, the control section 20 outputs feature information FI indicating that the object DM2 is an object other than a bubble.

As another example, in the container CN illustrated on the left side of Fig. 6, an object DM4 and an object DM5 are present in the liquid. When the container CN is made to swing as illustrated on the left side of Fig. 6, the object DM4 moves and draws a locus DL4 and the object DM5 moves and draws a locus DL5, as illustrated on the right side of Fig. 6. The control section 20 obtains, as the input data IN, a moving image taken of a swinging state of the container CN, and detects the loci DL4 and DL5. Then, the control section 20 determines that both the loci DL4 and DL5 are a locus drawn by a bubble, and thus, the control section 20 outputs feature information FI indicating that the object DM4 that draws the locus DL4 and the object DM5 that draws the locus DL5 are both bubbles.

It should be noted that the processing to analyze a moving image obtained by taking of a swinging state of the container CN and to detect a locus of an object present in the container CN may be carried out by the control section 20 or may be carried out by an apparatus other than the information processing apparatus 2. In a case where an apparatus other than the information processing apparatus 2 detects a locus of an object present in the container CN, the information processing apparatus 2 may be configured to obtain, as the input data IN, a locus detected by the apparatus other than the information processing apparatus 2.

For example, in the examples illustrated in Figs. 5 and 6, the information processing apparatus 2 obtains the loci DL1 to DL5 as the input data IN. Then, the information processing apparatus 2 refers to the loci DL1 to DL5 and outputs feature information FI indicating whether or not each of the objects DM1 to DM5 is a bubble.

In this way, the information processing apparatus 2 outputs the feature information FI indicating whether or not an object present in the container CN holding the liquid is a bubble. Thus, the information processing apparatus 2 can be used for inspection of whether or not liquid contains foreign matter. Further, the information processing apparatus 2 can preferably infer whether or not foreign matter is contained in the liquid even in a case where the loci DL1 to DL5 having various lengths are inputted as the input data IN.

### (Processing S2 carried out by information processing apparatus 2)

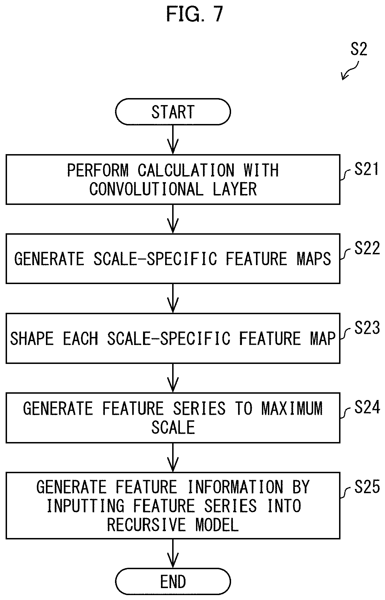

The following description will discuss the flow of processing S2 carried out by the information processing apparatus 2 with reference to Fig. 7. Fig. 7 is a flowchart illustrating the flow of the processing S2 carried out by the information processing apparatus 2 in accordance with the present example embodiment. Before the processing illustrated in Fig. 7, the information processing apparatus 2 obtains input data IN via the communication section 22 or the input section 23, and stores the obtained input data IN in the storage section 21. In addition, before the processing illustrated in Fig. 7 or a process of step S24 described later, the maximum scale calculation section 14 calculates the maximum scale MS and stores the calculated maximum scale MS in the storage section 21.

### (Step S21)

In step S21, the feature map generation section 11 obtains the input data IN from the storage section 21. The feature map generation section 11 inputs the obtained input data IN into the plurality of convolutional layers that generate a plurality of scale-specific feature maps by acting on input data in series, and perform calculation by using the convolutional layers.

### (Step S22)

In step S22, the feature map generation section 11 generates a plurality of scale-specific feature maps FM by the calculation with the convolutional layers. The details of the process in which the feature map generation section 11 generates the scale-specific feature maps FM are as described above. The feature map generation section 11 stores the generated plurality of scale-specific feature maps FM in the storage section 21.

### (Step S23)

In step S23, the feature series generation section 12 obtains the plurality of scale-specific feature maps FM from the storage section 21. The feature series generation section 12 inputs the obtained plurality of scale-specific feature maps FM into the scale-specific shaping section 121, and shapes the obtained plurality of scale-specific feature maps FM by having the differences in their respective lengths and dimensionalities accommodated, to generate a plurality of feature data. The details of the process in which the feature series generation section 12 generates the plurality of feature data are as described above. The feature series generation section 12 provides the generated plurality of feature data to the multiple-scale connection section 122.

### (Step S24)

In step S24, the multiple-scale connection section 122 obtains: the plurality of feature data generated by the scale-specific shaping section 121; and the maximum scale MS stored in the storage section 21. Subsequently, the multiple-scale connection section 122 generates a feature series SF corresponding to the value indicated by the maximum scale MS. The details of the process in which the multiple-scale connection section 122 generates the feature series SF are as described above. The multiple-scale connection section 122 stores the generated feature series SF in the storage section 21.

### (Step S25)

In step S25, the feature information generation section 13 obtains the feature series SF stored in the storage section 21. Then, the feature information generation section 13 inputs the obtained feature series SF into a recursive block, which is a recursive model, to generate feature information FI.

As described above, the feature information FI generated by the feature information generation section 13 may be provided to the FC 18, or may be provided to the communication section 22 or the output section 24, depending on the format outputted.

As described in the foregoing, the information processing apparatus 2 in accordance with the present example embodiment employs a configuration including the feature map generation section 11 that generates a plurality of scale-specific feature maps FM from input data IN, the feature series generation section 12 that generates a feature series SF from the plurality of scale-specific feature maps FM, and the feature information generation section 13 that generates feature information FI by inputting the feature series SF into a recursive model. Thus, the information processing apparatus 2 in accordance with the present example embodiment achieves an example advantage similar to that of the information processing apparatus 1.

### [Third example embodiment]

The following description will discuss a third example embodiment of the present invention in detail with reference to the drawings. The same reference symbols are given to constituent elements which have functions identical to those described in the above example embodiments, and descriptions as to such constituent elements are omitted as appropriate.

### (Configuration of information processing apparatus 2A)

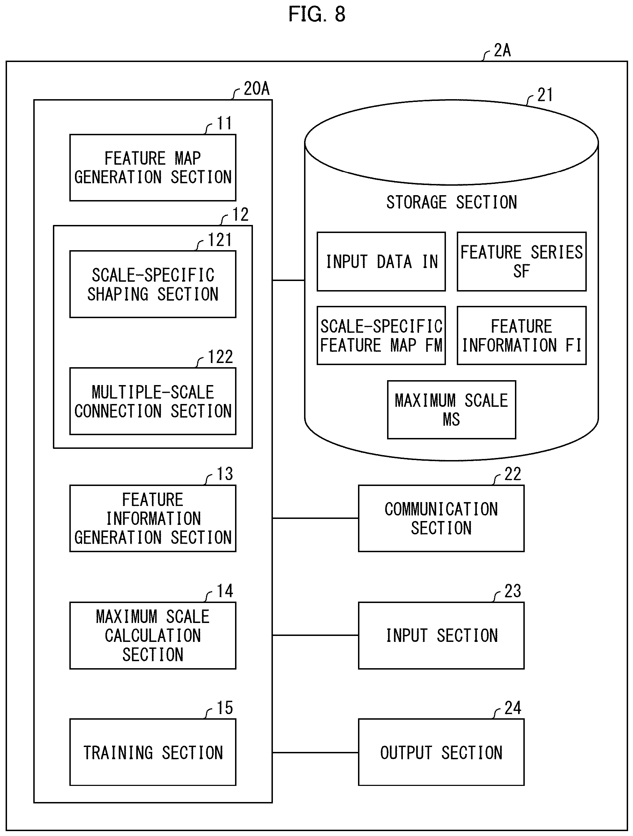

The following description will discuss the configuration of an information processing apparatus 2A in accordance with the present example embodiment with reference to Fig. 8. Fig. 8 is a block diagram illustrating the configuration of the information processing apparatus 2A in accordance with the present example embodiment.

The information processing apparatus 2A has a configuration of including a control section 20A, instead of the control section 20 included in the information processing apparatus 2 described above. The storage section 21, the communication section 22, the input section 23, and the output section 24 are as described above.

### (Control section 20A)

The control section 20A controls each of the sections included in the information processing apparatus 2A. As an example, the control section 20A may store data obtained from the communication section 22 and the input section 23 in the storage section 21, and may provide data stored in the storage section 21 to the communication section 22 and the output section 24.

As illustrated in Fig. 8, the control section 20A also functions as the feature map generation section 11, the feature series generation section 12, the feature information generation section 13, the maximum scale calculation section 14, and a training section 15. The feature map generation section 11, the feature series generation section 12, the feature information generation section 13, and the maximum scale calculation section 14 are configured to implement feature map generation means, feature series generation means, feature information generation means, and maximum scale calculation means, respectively, in the present example embodiment.

The feature map generation section 11, the feature series generation section 12, the feature information generation section 13, and the maximum scale calculation section 14 are as described above.

The training section 15 refers to input data IN and a ground-truth label associated with the input data IN, and updates at least one of the parameters of the convolutional blocks included in the feature map generation section 11, and the GPs and the FCs included in the feature series generation section 12. For example, when the input data IN is inputted into the feature map generation section 11 and the feature information FI outputted from the feature information generation section 13 does not match the ground-truth label, the training section 15 updates at least one of the parameters of the convolutional blocks included in the feature map generation section 11, and the GPs and the FCs included in the feature series generation section 12 in a manner such that the difference between the feature information FI and the ground-truth label decreases.

Thus, the information processing apparatus 2A in accordance with the present example embodiment employs a configuration in which the input data IN and the ground-truth label associated with the input data IN are referred to, and at least one of the parameters of the convolutional blocks, the GPs, and the FCs is updated. Thus, according to the information processing apparatus 2A in accordance with the present example embodiment, since the convolutional blocks, the GPs, and the FCs can be trained, it is possible to provide an inference technique that is suitably applicable.

### [Fourth example embodiment]

The following description will discuss a fourth example embodiment of the present invention in detail with reference to the drawings. The same reference symbols are given to constituent elements which have functions identical to those described in the above example embodiments, and descriptions as to such constituent elements are omitted as appropriate.

### (Configuration of information processing apparatus 2B)

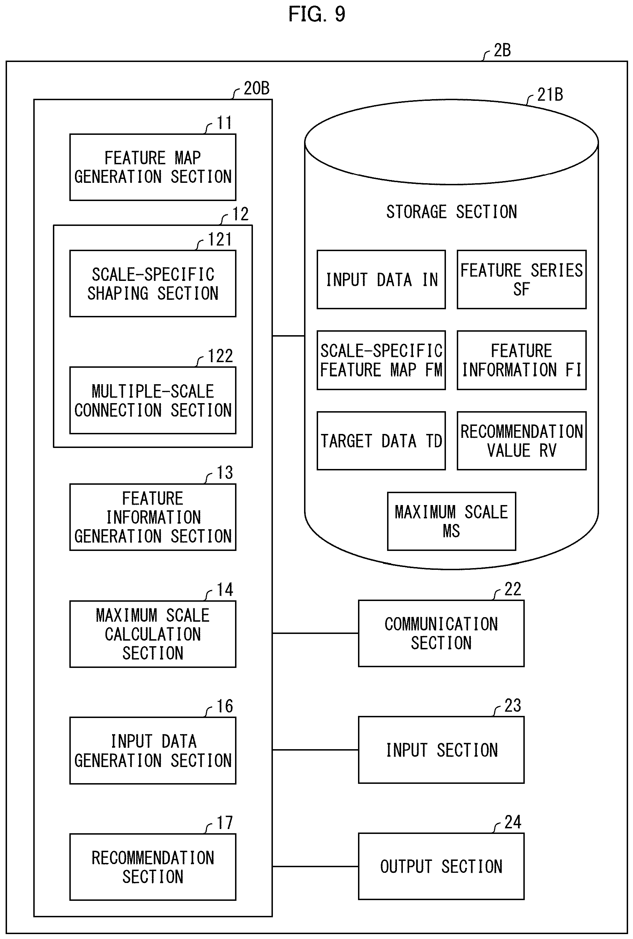

The following description will discuss the configuration of an information processing apparatus 2B in accordance with the present example embodiment with reference to Fig. 9. Fig. 9 is a block diagram illustrating the configuration of the information processing apparatus 2B in accordance with the present example embodiment.

The information processing apparatus 2B obtains target data TD and generates a plurality of input data IN by cutting the target data TD into a plurality of lengths. The information processing apparatus 2B determines a recommendation value RV indicating a recommended length from among the plurality of lengths, with reference to feature information FI corresponding to each of the plurality of input data IN.

The information processing apparatus 2B has a configuration of including a storage section 21B and a control section 20B, instead of the storage section 21 and the control section 20 included in the information processing apparatus 2 described above. The communication section 22, the input section 23, and the output section 24 are as described above.

The storage section 21B stores data referred to by the control section 20B described later. As an example, the storage section 21B stores the target data TD and the recommendation value RV in addition to the data stored in the storage section 21 described above.

### (Control section 20B)

The control section 20B controls each of the sections included in the information processing apparatus 2B. As an example, the control section 20B may store data obtained from the communication section 22 and the input section 23 in the storage section 21B, and may provide data stored in the storage section 21B to the communication section 22 and the output section 24.

As illustrated in Fig. 9, the control section 20B also functions as the feature map generation section 11, the feature series generation section 12, the feature information generation section 13, the maximum scale calculation section 14, an input data generation section 16, and a recommendation section 17. The feature map generation section 11, the feature series generation section 12, the feature information generation section 13, the maximum scale calculation section 14, the input data generation section 16, and the recommendation section 17 are configured to implement feature map generation means, feature series generation means, feature information generation means, maximum scale calculation means, input data generation means, and recommendation means, respectively, in the present example embodiment.

The feature map generation section 11, the feature series generation section 12, the feature information generation section 13, and the maximum scale calculation section 14 are as described above.

The input data generation section 16 generates a plurality of input data IN by cutting target data TD into a plurality of lengths. As an example, the input data generation section 16 may generate input data IN obtained by cutting the target data TD to have a predetermined length of time (such as 3 seconds long, 5 seconds long, and 10 seconds long). The input data generation section 16 stores the generated input data IN in the storage section 21B.

The recommendation section 17 determines a recommendation value RV indicating the recommended length from among the plurality of lengths cut out by the input data generation section 16, with reference to feature information FI corresponding to each of the plurality of input data IN. As an example, the recommendation section 17 may determine the recommendation value RV to such a length that the accuracy information included in the feature information FI is greater than a predetermined value and the length is a length of the shortest input data IN. The recommendation section 17 stores the determined recommendation value RV in the storage section 21B.

### (Processing S2A carried out by information processing apparatus 2B)

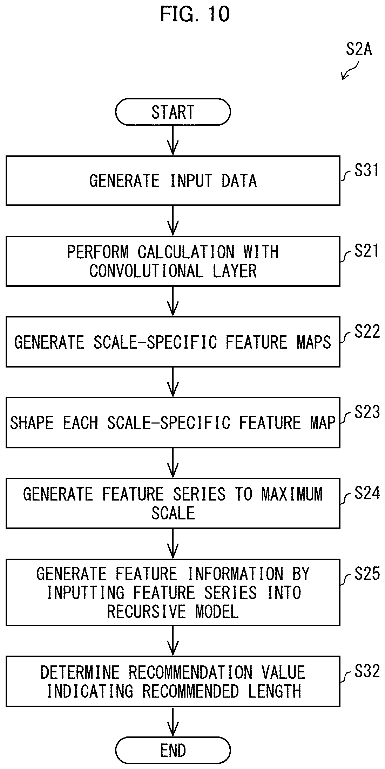

The following description will discuss the flow of processing carried out by the information processing apparatus 2B with reference to Fig. 10. Fig. 10 is a flowchart illustrating the flow of the processing S2A carried out by the information processing apparatus 2B in accordance with the present example embodiment. Before the processing illustrated in Fig. 10, the information processing apparatus 2 obtains target data TD via the communication section 22 or the input section 23, and stores the obtained target data TD in the storage section 21B. In addition, similarly to the processing illustrated in Fig. 7, before the processing illustrated in Fig. 10 or a process of step S24 described later, the maximum scale calculation section 14 calculates the maximum scale MS and stores the calculated maximum scale MS in the storage section 21B.

### (Step S31)

In step S31, the input data generation section 16 obtains target data TD from the storage section 21B. Then, the input data generation section 16 generates a plurality of input data IN by cutting the obtained target data TD into a plurality of lengths. The input data generation section 16 stores the generated plurality of input data IN in the storage section 21B.

### (Steps S21 to S25)

Steps S21 to S25 that serve as the processing in which the feature map generation section 11 obtains the input data IN from the storage section 21B and the feature information generation section 13 generates the feature information FI are as described above.

### (Step S32)

In step S32, the recommendation section 17 determines a recommendation value RV indicating the recommended length from among the plurality of lengths cut out by the input data generation section 16 in step S31, with reference to feature information FI corresponding to each of the plurality of input data IN. The recommendation section 17 stores the determined recommendation value RV in the storage section 21B.

The recommendation value RV may be configured so that the recommendation value RV is referred to by the input data generation section 16 and input data IN having a length of the recommendation value RV is generated. Further, the recommendation value RV may be configured so that the recommendation value RV is referred to in an apparatus other than the information processing apparatus 2, input data IN with a length of the recommendation value RV is generated, and the generated input data IN is inputted into the information processing apparatus 2B.

As described in the foregoing, the information processing apparatus 2B in accordance with the present example embodiment employs a configuration including the input data generation section 16 that generates a plurality of input data IN by cutting target data TD into a plurality of lengths, and the recommendation section 17 that determines a recommendation value RV indicating the recommended length from among the plurality of length with reference to feature information FI corresponding to each of the plurality of input data IN. Thus, according to the information processing apparatus 2B in accordance with the present example embodiment, it is possible to generate input data IN that has high accuracy and that can shorten the processing time.

### [Software implementation example]

Some or all of the functions of each of the information processing apparatuses 1, 2, 2A, and 2B may be implemented by hardware such as an integrated circuit (IC chip), or may be alternatively implemented by software.

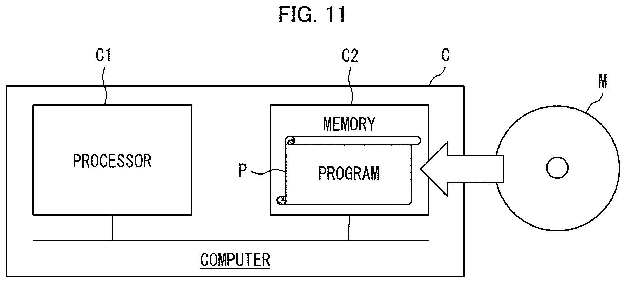

In the latter case, the information processing apparatuses 1, 2, 2A, and 2B are implemented by, for example, a computer that executes instructions of a program that is software implementing the foregoing functions. Fig. 11 illustrates an example of such a computer (hereinafter, referred to as "computer C"). The computer C includes at least one processor C1 and at least one memory C2. The memory C2 stores a program P for causing the computer C to operate as the information processing apparatuses 1, 2, 2A, and 2B. The processor C1 of the computer C retrieves the program P from the memory C2 and executes the program P, so that the functions of the information processing apparatuses 1, 2, 2A, and 2B are implemented.

As the processor C1, for example, it is possible to use a central processing unit (CPU), a graphic processing unit (GPU), a digital signal processor (DSP), a micro processing unit (MPU), a floating point number processing unit (FPU), a physics processing unit (PPU), a microcontroller, or a combination of these. The memory C2 can be, for example, a flash memory, a hard disk drive (HDD), a solid state drive (SSD), or a combination of these.

Note that the computer C can further include a random access memory (RAM) in which the program P is loaded when the program P is executed and in which various kinds of data are temporarily stored. The computer C can further include a communication interface for carrying out transmission and reception of data with other apparatuses. The computer C can further include an input/output interface for connecting input-output apparatuses such as a keyboard, a mouse, a display and a printer.

The program P can be stored in a non-transitory tangible storage medium M which is readable by the computer C. The storage medium M can be, for example, a tape, a disk, a card, a semiconductor memory, a programmable logic circuit, or the like. The computer C can obtain the program P via the storage medium M. The program P can be transmitted via a transmission medium. The transmission medium can be, for example, a communications network, a broadcast wave, or the like. The computer C can obtain the program P also via such a transmission medium.

### [Additional remark 1]

The present invention is not limited to the above example embodiments, but may be altered in various ways by a skilled person within the scope of the claims. For example, the present invention also encompasses, in its technical scope, any example embodiment derived by appropriately combining technical means disclosed in the foregoing example embodiments.

### [Additional remark 2]

Some of or all of the foregoing example embodiments can also be described as below. Note, however, that the present invention is not limited to the following supplementary notes.

### (Supplementary note 1)

An information processing apparatus including: feature map generation means for generating a plurality of scale-specific feature maps from input data; feature series generation means for generating a feature series from the plurality of scale-specific feature maps; and feature information generation means for generating feature information by inputting the feature series into a recursive model.

With this configuration, it is possible to provide an inference technique that is suitably applicable even in a case where data having various lengths are inputted.

### (Supplementary note 2)

The information processing apparatus according to Supplementary note 1, further including maximum scale calculation means for calculating a maximum scale, wherein the feature series generation means generates a feature series having a length in accordance with the maximum scale.

With this configuration, it is possible to omit processing of unnecessary data.

### (Supplementary note 3)

The information processing apparatus according to Supplementary note 2, wherein the maximum scale calculation means refers to the input data or relevant information associated with the input data, to calculate the maximum scale.

With this configuration, it is possible to suitably process data.

### (Supplementary note 4)

The information processing apparatus according to any one of Supplementary notes 1 to 3, wherein the feature map generation means includes a plurality of convolutional layers that act on the input data in series, to generate the plurality of scale-specific feature maps.

With this configuration, it is possible to provide an inference technique that is suitably applicable even in a case where data having various lengths are inputted.

### (Supplementary note 5)

The information processing apparatus according to Supplementary note 4, wherein the feature series generation means includes, for each of the plurality of convolutional layers: a global pooling layer that acts on a scale-specific feature map outputted from the convolutional layer; and a fully connected layer that acts on output of the global pooling layer.

With this configuration, it is possible to provide an inference technique that is suitably applicable even in a case where data having various lengths are inputted.

### (Supplementary note 6)

The information processing apparatus according to Supplementary note 5, wherein the feature series generation means arranges a plurality of feature data outputted from the respective fully connected layers, in order of scale corresponding to the plurality of feature data, to generate the feature series.

With this configuration, it is possible to suitably process data.

### (Supplementary note 7)

The information processing apparatus according to any one of Supplementary notes 1 to 6, further including: input data generation means for generating a plurality of the input data by cutting target data into a plurality of lengths; and recommendation means for determining a recommended length from among the plurality of lengths, with reference to feature information corresponding to each of the plurality of the input data.

With this configuration, it is possible to suitably process data.

### (Supplementary note 8)

An information processing method including: generating, by an information processing apparatus, a plurality of scale-specific feature maps from input data; generating, by the information processing apparatus, a feature series from the plurality of scale-specific feature maps; and generating, by the information processing apparatus, feature information by inputting the feature series into a recursive model.

With this configuration, it is possible to provide an inference technique that is suitably applicable even in a case where data having various lengths are inputted.

### (Supplementary note 9)

The information processing method according to Supplementary note 8, further including calculating, by the information processing apparatus, a maximum scale, wherein the generating of the feature series including generating a feature series having a length in accordance with the maximum scale.

With this configuration, it is possible to omit processing of unnecessary data.

### (Supplementary note 10)

The information processing method according to Supplementary note 9, wherein the calculating of the maximum scale including referring to the input data or relevant information associated with the input data, to calculate the maximum scale.

With this configuration, it is possible to suitably process data.

### (Supplementary note 11)

The information processing method according to any one of Supplementary notes 8 to 10, wherein the generating of the scale-specific feature map including causing a plurality of convolutional layers to act on the input data in series, to generate the plurality of scale-specific feature maps.

With this configuration, it is possible to provide an inference technique that is suitably applicable even in a case where data having various lengths are inputted.

### (Supplementary note 12)

The information processing method according to Supplementary note 11, wherein the generating of the feature series including, for each of the plurality of convolutional layers: causing a global pooling layer to act on a scale-specific feature map outputted from the convolutional layer; and causing a fully connected layer to act on output of the global pooling layer.

With this configuration, it is possible to provide an inference technique that is suitably applicable even in a case where data having various lengths are inputted.

### (Supplementary note 13)

The information processing method according to Supplementary note 12, wherein the generating of the feature series including arranging a plurality of feature data outputted from the respective fully connected layers, in order of scale corresponding to the plurality of feature data, to generate the feature series.

With this configuration, it is possible to suitably process data.

### (Supplementary note 14)

The information processing method according to any one of Supplementary notes 8 to 13, further including: generating, by the information processing apparatus, a plurality of the input data by cutting target data into a plurality of lengths; and determining, by the information processing apparatus, a recommended length from among the plurality of lengths, with reference to feature information corresponding to each of the plurality of the input data.

With this configuration, it is possible to suitably process data.

### (Supplementary note 15)

A program for causing a computer to operate as the information processing apparatus according to any one of Supplementary notes 1 to 7, the program causing the computer to function as each of the means.

With this configuration, it is possible to provide an inference technique that is suitably applicable even in a case where data having various lengths are inputted.

### [Additional remark 3]

Furthermore, some of or all of the above example embodiments can also be expressed as below.

An information processing apparatus including at least one processor, the at least one processor carrying out: a feature map generation process of generating a plurality of scale-specific feature maps from input data; a feature series generation process of generating a feature series from the plurality of scale-specific feature maps; and a feature information generation process of generating feature information by inputting the feature series into a recursive model.

It should be noted that this information processing apparatus may further include a memory, which may store therein a program for causing the at least one processor to carry out the feature map generation process, the feature series generation process, and the feature information generation process. Alternatively, the program may be stored in a computer-readable, non-transitory, tangible storage medium.

### Reference Signs List

1, 2, 2A, 2B Information processing apparatus
11 Feature map generation section
12 Feature series generation section
13 Feature information generation section
14 Maximum scale calculation section
15 Training section
16 Input data generation section
17 Recommendation section
20, 20A, 20B Control section
21, 21B Storage section
22 Communication section
23 Input section
24 Output section
121 Scale-specific shaping section
122 Multiple-scale connection section

## Claims

1. An information processing apparatus comprising:
feature map generation means for generating a plurality of scale-specific feature maps from input data;
feature series generation means for generating a feature series from the plurality of scale-specific feature maps; and
feature information generation means for generating feature information by inputting the feature series into a recursive model.

2. The information processing apparatus according to claim 1, further comprising maximum scale calculation means for calculating a maximum scale,
wherein the feature series generation means generates a feature series having a length in accordance with the maximum scale.

3. The information processing apparatus according to claim 2, wherein the maximum scale calculation means refers to the input data or relevant information associated with the input data, to calculate the maximum scale.

4. The information processing apparatus according to any one of claims 1 to 3, wherein the feature map generation means comprises a plurality of convolutional layers that act on the input data in series, to generate the plurality of scale-specific feature maps.

5. The information processing apparatus according to claim 4, wherein the feature series generation means comprises, for each of the plurality of convolutional layers:
a global pooling layer that acts on a scale-specific feature map outputted from the convolutional layer; and
a fully connected layer that acts on output of the global pooling layer.

6. The information processing apparatus according to claim 5, wherein the feature series generation means arranges a plurality of feature data outputted from the respective fully connected layers, in order of scale corresponding to the plurality of feature data, to generate the feature series.

7. The information processing apparatus according to any one of claims 1 to 6, further comprising:
input data generation means for generating a plurality of the input data by cutting target data into a plurality of lengths; and
recommendation means for determining a recommended length from among the plurality of lengths, with reference to feature information corresponding to each of the plurality of the input data.

8. An information processing method comprising:
generating, by an information processing apparatus, a plurality of scale-specific feature maps from input data;
generating, by the information processing apparatus, a feature series from the plurality of scale-specific feature maps; and
generating, by the information processing apparatus, feature information by inputting the feature series into a recursive model.

9. The information processing method according to claim 8, further comprising calculating, by the information processing apparatus, a maximum scale,
wherein the generating of the feature series comprising generating a feature series having a length in accordance with the maximum scale.

10. The information processing method according to claim 9, wherein the calculating of the maximum scale comprising referring to the input data or relevant information associated with the input data, to calculate the maximum scale.

11. The information processing method according to any one of claims 8 to 10, wherein the generating of the scale-specific feature map comprising causing a plurality of convolutional layers to act on the input data in series, to generate the plurality of scale-specific feature maps.

12. The information processing method according to claim 11, wherein the generating of the feature series comprising, for each of the plurality of convolutional layers:
causing a global pooling layer to act on a scale-specific feature map outputted from the convolutional layer; and
causing a fully connected layer to act on output of the global pooling layer.

13. The information processing method according to claim 12, wherein the generating of the feature series comprising arranging a plurality of feature data outputted from the respective fully connected layers, in order of scale corresponding to the plurality of feature data, to generate the feature series.

14. The information processing method according to any one of claims 8 to 13, further comprising:
generating, by the information processing apparatus, a plurality of the input data by cutting target data into a plurality of lengths; and
determining, by the information processing apparatus, a recommended length from among the plurality of lengths, with reference to feature information corresponding to each of the plurality of the input data.

15. A program for causing a computer to function as:
feature map generation means for generating a plurality of scale-specific feature maps from input data;
feature series generation means for generating a feature series from the plurality of scale-specific feature maps; and
feature information generation means for generating feature information by inputting the feature series into a recursive model.

16. The program according to claim 15, further causing the computer to function as maximum scale calculation means for calculating a maximum scale,
wherein the feature series generation means generates a feature series having a length in accordance with the maximum scale.

17. The program according to claim 16, wherein the maximum scale calculation means refers to the input data or relevant information associated with the input data, to calculate the maximum scale.

18. The program according to any one of claims 15 to 17, wherein the feature map generation means comprises a plurality of convolutional layers that act on the input data in series, to generate the plurality of scale-specific feature maps.

19. The program according to claim 18, wherein the feature series generation means comprising, for each of the plurality of convolutional layers:
a global pooling layer that acts on a scale-specific feature map outputted from the convolutional layer; and
a fully connected layer that acts on output of the global pooling layer.

20. The program according to claim 19, wherein the feature series generation means arranges a plurality of feature data outputted from the respective fully connected layers, in order of scale corresponding to the plurality of feature data, to generate the feature series.

21. The program according to any one of claims 15 to 20, further causing the computer to function as:
input data generation means for generating a plurality of the input data by cutting target data into a plurality of lengths; and
recommendation means for determining a recommended length from among the plurality of lengths, with reference to feature information corresponding to each of the plurality of the input data.
